# EUROPÄISCHE PATENTSCHRIFT

(11) **EP 3 073 229 B1**
(45) Veröffentlichungstag und Bekanntmachung des Hinweises auf die Patenterteilung: **22.06.2022**
(21) Anmeldenummer: 15161432.8
(22) Anmeldetag: 27.03.2015
(51) Int. Cl.: G01F 23/28, G01S 13/86, G01F 23/24, G01F 23/26

(54) **RADAR-FÜLLSTANDMESSGERÄT MIT INTEGRIERTEM GRENZSTANDSENSOR**
RADAR FILL LEVEL MEASURING DEVICE WITH INTEGRATED LIMIT LEVEL SENSOR
CAPTEUR RADAR DE MESURE DU NIVEAU DE REMPLISSAGE ET CAPTEUR DE NIVEAU LIMITE INTÉGRÉ

(43) Veröffentlichungstag der Anmeldung: 28.09.2016
(73) Patentinhaber: VEGA Grieshaber KG, 77709 Wolfach (DE)
(72) Erfinder: Fehrenbach, Josef, 77716 Haslach i. K. (DE); Schultheiss, Daniel, 78132 Hornberg (DE)
(74) Vertreter: Maiwald Patent- und Rechtsanwaltsgesellschaft mbH

(56) Entgegenhaltungen:
- EP-A2- 0 668 488
- DE-A1- 10 051 025
- DE-A1-102004 041 857
- DE-A1-102006 016 381
- DE-A1-102006 051 102
- DE-A1-102010 064 394
- DE-A1-102013 113 766
- DE-U1- 20 321 736

## Beschreibung

### Gebiet der Erfindung

Die vorliegende Erfindung betrifft die Messung von Füllständen durch Füllstandmessgeräte. Insbesondere betrifft die Erfindung ein Radar-Füllstandmessgerät sowie eine Radarantennenanordnung für ein Radar-Füllstandmessgerät.

### Hintergrund der Erfindung

Von Füllstandmessgeräten nach dem Radarprinzip sollte stets ein eindeutiges Messergebnis bereitgestellt werden. Das bedeutet, dass ein Messwert innerhalb eines Messbereichs stets mit einer angegebenen Genauigkeit bereitgestellt werden kann. Bei größeren Entfernungen genügt meist die Aussage, dass der Messwert größer ist als eine Maximaldistanz bzw. dass der Messwert nicht ermittelbar ist. Auch bei kleinen Distanzen, das heißt im Nahbereich des Sensors, ist es möglich, dass der Sensor eine sichere Erkennung der maximalen Füllhöhe bzw. des maximalen Pegels nicht bereitstellen kann. Insbesondere stellen bisherige Radarsensoren im überfluteten Zustand des Messsensors oft ein nicht eindeutiges Signal bereit. Diese Signale können beispielsweise einem sehr weit entfernten Ziel entsprechen oder es kann vorkommen, dass das Empfangssignal einem Messsignal in einem Absorber hinein ähnlich ist.

Bei bisherigen Sensoren werden oft Historienfunktionen verwendet, um Ziele oder Echos zu verfolgen und wiederzuerkennen. Da eine sichere Erkennung aber auch beim ersten Einschalten des Sensors gefordert ist, können diese Funktionen bei unklaren Echoverhältnissen nicht verwendet werden.

DE 10 2013 113 766 A1 beschreibt eine Vorrichtung zur Messung des Füllstands eines Füllgutes in einem Behälter. Dabei ist ein Füllstandsensor der Vorrichtung so ausgebildet, dass er den Füllstand über ein Laufzeitdifferenz-Messverfahren oder ein kapazitives Verfahren bestimmt. Die Vorrichtung weist ferner einen Grenzstandsensor zum Überwachen eines Grenzstandes des Füllgutes in dem Behälter auf.

DE 100 51 025 A1 beschreibt eine Vorrichtung zur Bestimmung des Füllstands eines Füllgutes in einem Behälter. Dabei erzeugt eine Signalerzeugungseinheit Messsignale, welche mit einer Antenne in Richtung der Oberfläche des Füllgutes ausgesendet und empfangen werden. Eine Regel- bzw. Auswerteeinheit bestimmt anhand der Messsignale den Füllstand des Füllgutes in dem Behälter.

DE 10 2006 016 381 A1 beschreibt eine Messvorrichtung mit einer Sensoreinheit, welche einen Rohwert erzeugt. Eine Steuereinheit steuert die Sensoreinheit und/oder erzeugt aus dem Rohwert einen vom Rohwert abhängigen Verarbeitungswert, welcher über eine Ein-/Ausgabeeinheit ausgegeben wird.

DE 10 2006 051 102 A1 beschreibt ein Prozessautomatisierungssystem zur Bestimmung, zur Überwachung und/oder zum Beeinflussen von unterschiedlichen Prozessgrößen und/oder Verfahrensgrößen. Feldgeräte weisen dabei jeweils einen Sensor zum Ermitteln eines Messwerts einer bestimmten Prozessgröße auf.

DE 10 2004 041 857 A1 beschreibt ein Verfahren und eine Vorrichtung zur zum Ausrichten eines Messgerätes zur Ermittlung des Füllstandes eines Füllgutes in einem Behälter nach der Laufzeitmessmethode. Dabei werden Einbaupositionen oder elektronisch eingestellte Abstrahlcharakteristiken von Sende- und Empfangseinheiten eingestellt.

DE 10 2010 064 394 A1 beschreibt ein Messgerät zur Bestimmung und/oder Überwachung des Grenzstands oder Füllstands eines Mediums in einem Behälter mit einer Sensoreinheit und einer Messumformeinheit. In dem Messgerät ist ein Neigungssensor integriert, der die Ausrichtung des Messgerätes und/oder der Sensoreinheit an dem Behälter ermittelt.

DE 203 21 736 U1 beschreibt eine Vorrichtung zur Bestimmung einer physikalischen Prozessgröße. Die Vorrichtung ist über eine Befestigungseinheit an einem Behälter oder Wandteil angebracht.

EP 0668 488 A2 beschreibt eine kontinuierliche Messung des Füllstands in einem Behälter mittels eines Laufzeitmessverfahrens. An dem Behälter sind mehrere Grenzwertgeber angebracht, von denen jeder ein Signal liefert, das anzeigt, ob der Füllstand im Behälter über oder unter einer vom Grenzwertgeber zu überwachenden Höhe liegt, die dem Füllstand entspricht.

### Zusammenfassung der Erfindung

Es ist eine Aufgabe der Erfindung, ein verbessertes Füllstandmessgerät bereitzustellen.

Diese Aufgabe wird durch die Gegenstände des unabhängigen Anspruchs gelöst.

Beispielhafte Ausführungsformen ergeben sich aus den abhängigen Ansprüchen und der nachfolgenden Beschreibung.

Gemäß einem Aspekt der Erfindung ist ein Radar-Füllstandmessgerät angegeben. Das Radar-Füllstandmessgerät weist eine Radarsensoreinheit mit einer Radarantenne zum Abstrahlen eines Messsignals in Richtung einer Füllgutoberfläche auf. Ferner weist das Radar-Füllstandmessgerät eine Grenzstandsensoreinheit auf. Die Radarsensoreinheit ist dazu ausgeführt, einen Füllstand des Füllgutes zu bestimmen und die Grenzstandsensoreinheit ist dazu ausgeführt, ein Unterschreiten eines Mindestabstandes der Füllgutoberfläche zur Radarantenne zu detektieren.

Das Unterschreiten des Grenzwertes kann auch bei einer Überflutung der Radarantenne oder des Radarsensors erfolgen, so dass das Unterschreiten des Mindestabstandes der Füllgutoberfläche zur Radarantenne erst bei Überflutung der Radarantenne bzw. des Radarsensors detektiert wird. Insbesondere kann der zu detektierende Mindestabstand der Füllgutoberfläche zur Radarantenne auch einen negativen Wert annehmen. Es ist möglich, dass die Grenzstandsensoreinheit dazu ausgeführt ist, das Unterschreiten des Mindestabstandes der Füllgutoberfläche zum Radarsensor, welcher die Radarantenne umfassen kann, zu detektieren

Dadurch ist es möglich, auch im Nahbereich des Messsensors, das heißt der Radarsensoreinheit, den Füllstand detektieren zu können. Insbesondere kann ein zu hoher Füllstand bzw. Pegelstand bei Erreichen des Mindestabstands der Füllgutoberfläche zur Radarantenne detektiert werden. Die Radarsensoreinheit kann dazu ausgeführt sein, das Messsignal in Richtung der Füllgutoberfläche abzustrahlen, wobei dieses Messsignal an der Füllgutoberfläche reflektiert wird und zur Radarsensoreinheit zurückgelangt. Damit kann zum Beispiel aufgrund einer Laufzeitmessung der Füllstand bestimmt werden. Steigt der Füllstand über einen bestimmten Grenzwert, so dass der Mindestabstand zwischen der Füllgutoberfläche und der Radarantenne unterschritten wird, so kann dies durch die Grenzstandsensoreinheit detektiert werden, woraufhin ein Warnsignal bzw. ein Warnhinweis ausgegeben werden kann.

Eine solche Grenzstandsensoreinheit kann zum Beispiel ein Grenzschalter sein, welcher im Bereich der Radarsensoreinheit angebracht ist. Mit anderen Worten wird für die sichere Erkennung des Füllstandes bzw. des Pegels im Nahbereich der Radarsensoreinheit ein zusätzlicher Grenzschalter, das heißt die Grenzstandsensoreinheit, vorgesehen, welcher derart eingestellt sein kann, dass er zum Beispiel eine Überflutung erkennt und anschließend entweder ein Warnhinweis oder ein Hinweis für einen vollen Zustand eines Behälters ausgeben kann.

Bei steigendem Füllstand erhöht sich der Pegel, das heißt der Abstand zwischen Radarsensoreinheit und Füllgutoberfläche verringert sich. Die Radarsensoreinheit ist dazu ausgeführt, den Füllstand des Füllgutes, welches sich beispielsweise innerhalb des Behälters befindet, kontinuierlich zu messen. Wird nun ein bestimmter maximaler Füllstand erreicht, der Mindestabstand zwischen der Füllgutoberfläche und der Radarantenne unterschritten oder die Radarsensoreinheit überflutet, so kann dies durch die Grenzstandsensoreinheit bzw. den Grenzschalter detektiert werden, woraufhin anschließend ein Warnsignal ausgegeben werden kann. Dies ist insbesondere von Vorteil, da bei Unterschreiten des Mindestabstands zwischen Füllgutoberfläche und Radarantenne die Genauigkeit der durch die Radarsensoreinheit ermittelten Messergebnisse abnehmen kann. Somit kann rechtzeitig ein Warnhinweis beispielsweise durch eine Auswerteeinheit ausgegeben werden.

Es sei angemerkt, dass die Grenzstandsensoreinheit das Unterschreiten des Mindestabstandes zwischen der Füllgutoberfläche und der Radarantenne bereits detektieren kann, wenn die Füllgutoberfläche die Radarantenne noch nicht erreicht hat. Jedoch ist es auch möglich, dass die Grenzstandsensoreinheit ein Unterschreiten des Mindestabstandes der Füllgutoberfläche zur Radarantenne erst detektiert, wenn die Radarantenne bzw. die Radarsensoreinheit vom Füllgut bereits überflutet wurde. Jedenfalls kann gewährleistet werden, dass Messwerte, welche von der Radarsensoreinheit im Nahbereich, das heißt bei Unterschreiten des Mindestabstandes der Füllgutoberfläche zur Radarantenne, ermittelt wurden, für eine möglicherweise sich anschließende Auswertung nicht mehr herangezogen werden. Vielmehr kann durch die Grenzstandsensoreinheit ein Warnhinweis über einen zu hohen Füllstand bereitgestellt werden und ferner kann darauf hingewiesen werden, dass durch den zu hohen Füllstand die durch die Radarsensoreinheit gemessenen Füllstandmesswerte gegebenenfalls nicht mehr die erforderliche Genauigkeit aufweisen.

Die Radarantenne der Radarsensoreinheit kann zum Beispiel in Form einer Hornantenne, einer Planarantenne, einer Parabolantenne, einer Linsenantenne, einer Arrayantenne oder einer anderen beliebigen Antennenform ausgebildet sein kann.

Gemäß der Erfindung weist das Radar-Füllstandmessgerät weiterhin ein Gehäuse auf, in welchem die Radarantenne angeordnet ist. Dabei ist die Grenzstandsensoreinheit am oder im Gehäuse angeordnet.

Das bedeutet, dass das Gehäuse sowohl die Radarantenne als auch die Grenzstandsensoreinheit beherbergen kann. Es ist ferner möglich, dass die Radarantenne zum einen im Gehäuse und die Grenzstandsensoreinheit zum anderen außerhalb des Gehäuses an diesem befestigt ist. Die Grenzstandsensoreinheit kann also im gleichen Gehäuse wie die Radarantenne oder die Sensorelektronik untergebracht sein. Die Grenzstandsensoreinheit oder zumindest ein Teil der Grenzstandsensoreinheit kann jedoch auch in der Antenne oder in einer Abdeckung der Antenne angebracht sein. Mit anderen Worten weist das Radar-Füllstandmessgerät einen integrierten Grenzstandsensor auf.

Für den Fall, dass die Grenzstandsensoreinheit außerhalb des Gehäuses an diesem angebracht ist, kann ein direkter Kontakt zwischen dem Füllgut und der Grenzstandsensoreinheit erreicht werden, was insbesondere bei einer Messung mittels eines konduktiven Verfahrens vorteilhaft ist. Bei einem kapazitiven Verfahren können die Elektroden hingegen in das Gehäuseinnere verlegt werden, was den Vorteil hat, dass die Elektroden nicht mit dem Füllgut in Kontakt stehen müssen. Dies wird in der Figurenbeschreibung noch genauer erläutert werden.

Gemäß einer weiteren Ausführungsform der Erfindung ist die Grenzstandsensoreinheit dazu ausgeführt, das Unterschreiten des Mindestabstandes der Füllgutoberfläche zur Radarantenne basierend auf einem elektromagnetischen Signal zu detektieren.

Dies kann beispielsweise ein elektromagnetisches Signal sein, wie es auch von der Radarsensoreinheit ausgesendet wird, um den Füllstand des Füllgutes zu bestimmen. Beispielsweise ist eine Grenzstanderfassung mittels Zeitbereichsreflektometrie (TDR) möglich, was nicht vom Schutzbereich der Erfindung abgedeckt ist. Der Füllstand kann dabei über eine Laufzeitmessung des elektromagnetischen Signals bestimmt werden.

Gemäß einer nicht beanspruchten Ausführungsform ist die Grenzstandsensoreinheit ein am Gehäuse angebrachter Vibrationssensor.

Ein solcher Vibrationssensor weist beispielsweise eine Stimmgabel auf. Dabei kann es erforderlich sein, dass der Vibrationssensor, das heißt die Stimmgabel, in direktem Kontakt mit dem Füllgut steht, um dieses detektieren zu können. Beispielsweise ragt die Stimmgabel oder ein Stab des Vibrationssensors in das Füllgut, welches beispielsweise eine Flüssigkeit darstellt, hinein, um somit das Unterschreiten des Mindestabstandes zwischen Füllgutoberfläche und Radarantenne zu detektieren. Vorteilhafterweise ist der Vibrationssensor, welcher die Stimmgabel oder den Stab aufweist, außerhalb des Gehäuses angeordnet, in dem die Radarantenne bzw. die Radarsensoreinheit angeordnet ist. In diesem Fall ragt die Grenzstandsensoreinheit aus dem Gehäuse heraus, so dass der Vibrationssensor einen überfüllten Zustand detektieren kann. Eine Auswertung der durch den Vibrationssensor erfassten Messwerte erfolgt zum Beispiel basierend auf einer Dämpfung bzw. einer Verschiebung der Eigenresonanz von Schwingungen.

Der Vibrationssensor kann also entweder ein Stab oder eine Stimmgabel aufweisen, welche in das Gehäuse der Radarsensoreinheit bzw. der Radarantenne eingebaut sind. Die Ausrichtung der Stimmgabel bzw. des Stabes kann waagerecht oder senkrecht sein. Mit anderen Worten kann der Stab oder die Stimmgabel in Richtung der Füllgutoberfläche gerichtet, das heißt senkrecht, sein. Jedoch ist es auch möglich, dass der Stab oder die Stimmgabel im Wesentlichen parallel bzw. parallel zur Füllgutoberfläche, das heißt waagerecht, ausgerichtet sind. Zur Anregung des Vibrationssensors, das heißt der Stimmgabel bzw. des Stabes, können verschiedenste Verfahren zum Einsatz kommen.

Gemäß einer nicht beanspruchten Ausführungsform ist die Grenzstandsensoreinheit dazu ausgeführt, das Unterschreiten des Mindestabstandes der Füllgutoberfläche zur Radarantenne basierend auf einer konduktiven Messung zu detektieren.

Die konduktive Messung des Grenzstandes kann beispielsweise mit Schirmelektroden zur Verringerung der Empfindlichkeit gegenüber Ablagerungen, Kondensat oder Verschmutzungen erfolgen. Unter Verwendung einer konduktiven Messung zur Grenzstanderfassung, das heißt zur Detektion des Unterschreitens des Mindestabstandes der Füllgutoberfläche zur Radarantenne, können mindestens zwei Elektroden am Gehäuse, in welchem sich die Radarantenne befindet, angeordnet sein. Die Elektroden können auf einer Außenseite des Gehäuses vorgesehen sein, so dass die Elektroden in direktem Kontakt mit dem Füllgut stehen.

Gemäß einer nicht beanspruchten Ausführungsform sind für die konduktive Messung zumindest zwei Elektroden am Gehäuse des Radar-Füllstandmessgerätes angebracht.

Dabei sind die mindestens zwei Elektroden zur konduktiven Messung an einer Außenseite des Gehäuses angebracht, so dass ein direkter Kontakt mit dem Füllgut gewährleistet werden kann. Diese mindestens zwei Elektroden können ferner flach oder stabförmig sein. Vorteilhafterweise stellt eine solche konduktive Messmethode ein einfaches Messprinzip dar, mit welchem das Unterschreiten des Mindestabstandes der Füllgutoberfläche zur Radarantenne rechtzeitig detektiert werden kann, so dass ein Warnhinweis eines vollen oder überfüllten Zustandes des Behälters, in welchem sich das Füllgut befindet, detektiert werden kann.

Gemäß der Erfindung ist die Grenzstandsensoreinheit dazu ausgeführt, das Unterschreiten des Mindestabstandes der Füllgutoberfläche basierend auf einer kapazitiven Messung zu detektieren.

Auch bei der kapazitiven Messung können Schirmelektroden zur Verringerung der Empfindlichkeit gegenüber Ablagerungen, Kondensat oder Verschmutzungen verwendet werden. Bei der kapazitiven Messmethode werden zur Füllstandmessung bzw. Detektierung unterschiedliche Dielektrizitätskonstanten oder Leitfähigkeiten des Füllgutes ausgenutzt, um ein Überschreiten des Grenzstandes, das heißt ein Unterschreiten des Mindestabstandes der Füllgutoberfläche zur Radarantenne, zu detektieren. Im Falle einer kapazitiven Messung kann die Grenzstandsensoreinheit somit eine Änderung der Kapazität feststellen, sobald der Mindestabstand zwischen Füllgutoberfläche und Radarantenne unterschritten wird.

Gemäß der Erfindung sind für die kapazitive Messung Elektroden im Gehäuse des Radar-Füllstandmessgerätes angebracht.

Das bedeutet, dass die Elektroden sowie die Radarantenne selbst innerhalb des Gehäuses befestigt sein können. Zusätzlich kann eine Elektronik für die Radarsensoreinheit und/oder die Grenzstandsensoreinheit in dem Gehäuse vorgesehen sein. Zur Anordnung der Elektroden im Gehäuse gibt es verschiedene Möglichkeiten, welche in der Figurenbeschreibung noch genauer erläutert werden.

Gemäß der Erfindung sind die Elektroden zur kapazitiven Messung im Gehäuse ringförmig um die Radarsensoreinheit angeordnet.

Die ringförmig angeordneten kapazitiven Elektroden können beispielsweise in Form von Schirmelektroden um die Radarantenne der Radarsensoreinheit angeordnet sein. Beispielsweise ist die Radarantenne eine Hornantenne, welche in Richtung der Füllgutoberfläche ausgerichtet ist. Die Elektroden können dann in einem Endbereich der Hornantenne ringförmig um diese angeordnet sein. Eine solche Anordnung hat den Vorteil, dass Platz eingespart und das Gehäuse entsprechend klein ausgeführt sein kann.

Gemäß einer weiteren Ausführungsform der Erfindung weist die Radarantenne eine Abdeckung auf, in welche die Elektroden zur kapazitiven Messung integriert sind.

Beispielsweise sind die kapazitiven Elektroden in die Abdeckung bzw. die Antennenabdeckung der Hornantenne integriert. Somit kann beispielsweise das Gehäuse platzsparend ausgeführt sein, indem die Radarsensoreinheit gleichzeitig auch die Grenzstandsensoreinheit oder zumindest ein Teil der Grenzstandsensoreinheit beherbergt.

Gemäß einer weiteren Ausführungsform der Erfindung sind die Elektroden zur kapazitiven Messung in Form von Metalleinlegeteilen in die Abdeckung der Radarantenne eingespritzt.

Insbesondere können die Elektroden im Gehäuse oder auf der Antennenabdeckung als Metalleinlegeteile in einen Kunststoff eingespritzt sein. Das bedeutet, dass die Antennenabdeckung mitsamt Metalleinlegeteilen, das heißt Elektroden, als MID-Teil (Molded Interconnect Device) hergestellt werden kann. Es ist auch möglich, dass die Elektroden nachträglich auf einem Kunststoff metallisiert werden. Mit dem Prozess der Strukturierung für die Metallisierung eignet sich insbesondere das sogenannte LDS-Verfahren (Laser Direct-Strukturierung). Das bedeutet, dass die Elektroden durch die Metallisierung in einer bestimmten Anordnung in die Abdeckung eingebracht sein können.

Gemäß einer nicht beanspruchten Ausführungsform weisen die Elektroden zur kapazitiven Messung eine streifenförmige Struktur auf und sind gegenüber der Radarsensoreinheit derart angeordnet, dass ein elektrisches Feld eines von der Radarsensoreinheit ausgesendeten Signals senkrecht zu der streifenförmigen Struktur der Elektroden angeordnet bzw. ausgerichtet ist.

Dazu kann die streifenförmige Struktur für die kapazitive Elektrode beispielsweise direkt vor der Radarantenne, das heißt zwischen der Radarantenne und der Füllgutoberfläche, angebracht sein. Beispielsweise wird die kapazitive Elektrode an der Abdeckung der Radarantenne angebracht, wobei die Abdeckung gleichzeitig auch ein Teil des Gehäuses, in welchem sich die Radarantenne befindet, sein kann.

Die streifenförmige Struktur kann dabei in einem Winkel von 90° zum elektrischen Feld des von der Radarsensoreinheit ausgesendeten Signals, insbesondere eines Mikrowellensignals, angeordnet sein, so dass die streifenförmige Struktur der Elektroden für dieses Signal durchlässig bzw. unsichtbar ist.

Gemäß einer weiteren Ausführungsform der Erfindung ist zumindest ein Teil der Grenzstandsensoreinheit zwischen der Radarsensoreinheit und dem Füllgut angeordnet.

Dies ist insbesondere der Fall, wenn Elektroden zur kapazitiven Messung in der Abdeckung der Radarantenne integriert sind. Somit ist es nicht erforderlich, dass die Elektroden um die Radarantenne der Radarsensoreinheit herum angeordnet sind oder anderweitig am Gehäuse vorgesehen sind, so dass das Gehäuse platzsparend ausgeführt sein kann.

Gemäß einer nicht beanspruchten Ausführungsform ist die Grenzstandsensoreinheit dazu ausgeführt, ein von der Radarsensoreinheit ausgesendetes Signal zu polarisieren.

Dies kann erreicht werden, wenn die kapazitiven Elektroden, das heißt die Elektroden zur kapazitiven Messung, in der streifenförmigen Struktur zwischen der Radarantenne und der Füllgutoberfläche angeordnet sind. Beispielsweise kann durch die streifenförmige Struktur der Elektroden lediglich ein Signal, insbesondere ein Mikrowellensignal, einer bestimmten Polarisationsrichtung hindurchgelassen werden. Die streifenförmige Struktur ist also für ein Signal genau dieser Polarisationsrichtung durchlässig bzw. unsichtbar. Zudem wirkt die streifenförmige Struktur der Elektroden, welche dabei beispielsweise parallel angeordnet sind, als Polarisationsfilter, so dass die Eigenschaften der Radarantenne weiter verbessert werden können. Die geometrische Ausgestaltung der Grenzstandsensoreinheit kann somit zusätzliche Vorteile für die Füllstandmessung durch die Radarsensoreinheit bewirken.

Gemäß einer nicht beanspruchten Ausführungsform ist die Grenzstandsensoreinheit zumindest teilweise in einem aus dem Gehäuse herausragenden Ansatz angeordnet.

Insbesondere können Elektroden zur kapazitiven Messung in dem Ansatz angeordnet sein. Somit können die Elektroden auch innerhalb des Gehäuses angeordnet sein und ein Kontakt zwischen den Elektroden und dem Füllgut kann vermieden werden. Der Ansatz kann in einem Querschnitt betrachtet etwa dreiecksförmig ausgebildet sein. Dabei kann eine dem Füllgut zugewandte Spitze des Dreiecks abgestumpft sein.

Demnach kann der Ansatz als dreidimensionaler Körper am Gehäuse vorgesehen sein, beispielsweise in Form eines Kegelstumpfes oder eines Pyramidenstumpfes Der Ansatz kann sich in Richtung der Füllgutoberfläche verjüngen. Der Ansatz kann in Form einer Ausstülpung aus dem Gehäuse herausragen. Dabei können die Elektroden derart angeordnet sein, dass sie sich näher an der Füllgutoberfläche befinden als die Radarsensoreinheit, zumindest dann, wenn die Radarsensoreinheit noch nicht überflutet ist. Es können drei oder mehrere Elektroden in verschiedenen Formen in dem Ansatz vorgesehen sein, wobei zwei oder mehrere der Elektroden an einem sich verjüngenden Abschnitt des Ansatzes angebracht sind und eine weitere Elektrode horizontal an einem Boden des Ansatzes bzw. an der abgestumpften, aus dem Gehäuse herausragenden Spitze des Ansatzes angebracht ist. Es ist jedoch auch möglich, dass lediglich zwei Elektroden in dem Ansatz vorgesehen sind, die in verschiedenen Formen ausgeführt und in dem Ansatz angebracht sein können. Die Elektroden können ferner in dem Ansatz eingebettet oder eingegossen sein. Das Unterschreiten des Mindestabstands zwischen Füllgutoberfläche und Radarantenne kann auch hier bereits detektiert werden, wenn der Füllstand noch nicht die Abdeckung der Radarantenne erreicht hat.

Gemäß einem Aspekt ist eine Radarantennenanordnung für ein Radar-Füllstandmessgerät angegeben. Die Radarantennenanordnung weist eine Radarantenne mit einem Gehäuse und/oder einer Abdeckung auf. Ferner weist die Radarantennenanordnung eine Grenzstandsensoreinheit gemäß Anspruch 1 auf, wobei zumindest ein Teil der Grenzstandsensoranordnung an dem Gehäuse oder an der Abdeckung angeordnet ist oder darin integriert ist. Die Radarantenne kann zum Beispiel ein Radarantennenhorn aufweisen.

Das bedeutet, dass zum Beispiel Elektroden der Grenzstandsensoreinheit an dem Gehäuse oder an der Abdeckung angeordnet sind, wie es im Rahmen der kapazitiven oder konduktiven Messung beschrieben wurde. Insbesondere kann vorgesehen sein, dass ein Teil der Grenzstandsensoreinheit in dem Gehäuse bzw. der Abdeckung integriert ist. Das bedeutet, dass die Elektroden in dem Gehäuse oder in der Abdeckung integriert bzw. eingearbeitet sein können. Es sei angemerkt, dass die Abdeckung des Radarantennenhorns auch ein Teil des Gehäuses sein kann bzw. diese beiden Teile ineinander übergehen können. Es sei ferner angemerkt, dass das Gehäuse und der Behälter, in dem sich das Füllgut befindet, zwei verschiedene Bauteile sein können. Insbesondere kann das Gehäuse als separates Bauteil in einem oberen Bereich des Behälters befestigt sein.

### Kurze Beschreibung der Figuren

- Fig. 1: zeigt ein Radar-Füllstandmessgerät mit einer Radarsensoreinheit und einer Grenzstandsensoreinheit gemäß einem nicht beanspruchten Ausführungsbeispiel.
- Fig. 2: zeigt eine Anordnung einer Radarsensoreinheit und einer Grenzstandsensoreinheit in Form eines Vibrationssensors gemäß einem nicht beanspruchten Ausführungsbeispiel.
- Fig. 3: zeigt eine Anordnung einer Radarsensoreinheit und einer Grenzstandsensoreinheit in Form eines Vibrationssensors gemäß einem nicht beanspruchten weiteren Ausführungsbeispiel.
- Fig. 4: zeigt eine Anordnung einer Radarsensoreinheit und einer Grenzstandsensoreinheit in Form eines Vibrationssensors gemäß einem nicht beanspruchten Ausführungsbeispiel.
- Fig. 5: zeigt eine Anordnung einer Radarsensoreinheit und einer Grenzstandsensoreinheit zur Ausführung einer Zeitbereichsreflektometrie gemäß einem nicht beanspruchten Ausführungsbeispiel.
- Fig. 6: zeigt eine Anordnung einer Radarsensoreinheit und einer Grenzstandsensoreinheit zur konduktiven Messung gemäß einem nicht beanspruchten Ausführungsbeispiel.
- Fig. 7: zeigt eine Anordnung einer Radarsensoreinheit und einer Grenzstandsensoreinheit zur konduktiven Messung gemäß einem nicht beanspruchten Ausführungsbeispiel.
- Fig. 8: zeigt eine Anordnung einer Radarsensoreinheit und Elektroden einer Grenzstandsensoreinheit zur kapazitiven Messung gemäß einem nicht beanspruchten Ausführungsbeispiel.
- Fig. 9: zeigt eine Anordnung einer Radarsensoreinheit und Elektroden einer Grenzstandsensoreinheit zur kapazitiven Messung gemäß einem Ausführungsbeispiel der Erfindung.
- Fig. 10: zeigt eine Anordnung einer Radarsensoreinheit und Elektroden einer Grenzstandsensoreinheit zur kapazitiven Messung gemäß einem Ausführungsbeispiel der Erfindung.
- Fig. 11: zeigt eine Anordnung einer Radarsensoreinheit und Elektroden einer Grenzstandsensoreinheit zur kapazitiven Messung gemäß einem nicht beanspruchten Ausführungsbeispiel.
- Fig. 12: zeigt eine streifenförmige Anordnung von Elektroden einer Grenzstandsensoreinheit zur kapazitiven Messung in einer Abdeckung einer Radarsensoreinheit gemäß einem nicht beanspruchten Ausführungsbeispiel.
- Fig. 13: zeigt eine Seitenansicht bzw. Schnittansicht einer streifenförmigen Struktur von Elektroden einer Grenzstandsensoreinheit zur kapazitiven Messung gemäß einem nicht beanspruchten Ausführungsbeispiel.
- Fig. 14: zeigt eine Radarantennenanordnung für ein Radar-Füllstandmessgerät mit einem Radarantennenhorn und Elektroden einer Grenzstandsensoreinheit gemäß einem nicht beanspruchten Ausführungsbeispiel.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

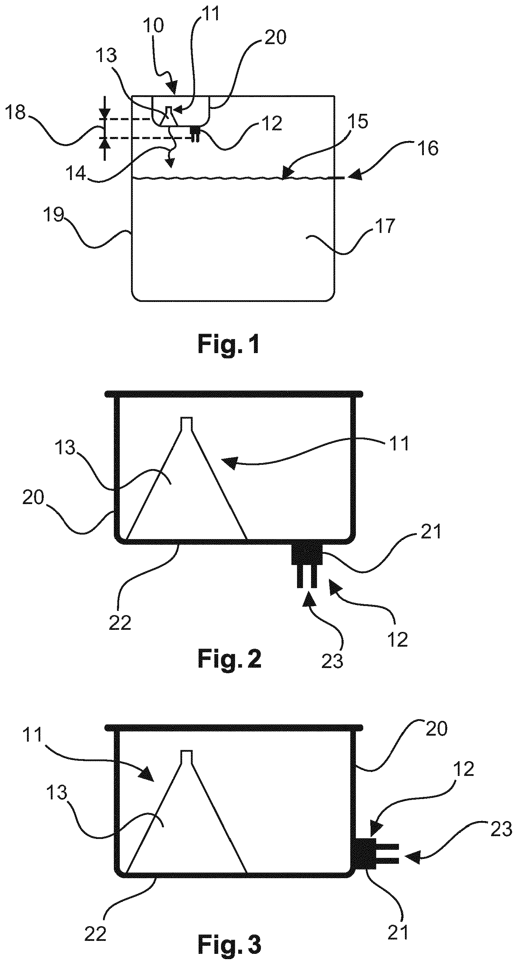

Fig. 1 zeigt ein Radar-Füllstandmessgerät 10 zur kontinuierlichen Messung eines Füllstandes 16 eines Füllgutes 17, welches sich beispielsweise in einem Behälter 19 befindet. Dabei ist das Radar-Füllstandmessgerät 10 beispielsweise in einem oberen Bereich des Behälters 19 angeordnet. In dem Behälter 19 ist das Füllgut 17 vorgesehen. Das Radar-Füllstandmessgerät 10 weist eine Radarsensoreinheit 11 sowie eine Grenzstandsensoreinheit 12 auf. Die Radarsensoreinheit 11 ist vorzugsweise innerhalb eines Gehäuses 20 angeordnet. Die Grenzstandsensoreinheit 12 kann beispielsweise innerhalb oder außerhalb des Gehäuses 20 angeordnet sein. In dem in Fig. 1 dargestellten Fall ist die Grenzstandsensoreinheit 12 an einer Außenseite des Gehäuses 20 befestigt.

Die Radarsensoreinheit 11 ist dazu ausgeführt, ein Signal 14 in Richtung einer Füllgutoberfläche 15 des Füllgutes 17 auszusenden. An der Füllgutoberfläche 15 wird dieses Signal 14 zurück zur Radarsensoreinheit 11 reflektiert, wobei beispielsweise aus einer Laufzeitmessung der Abstand zwischen der Radarsensoreinheit 11 und der Füllgutoberfläche 15 bestimmt werden kann.

Insbesondere kann daraus der Füllstand 16 bestimmt werden. Die Grenzstandsensoreinheit 12, welche in dem in Fig. 1 dargestellten Fall ein Vibrationssensor ist, kann ein Unterschreiten eines Mindestabstandes 18 der Füllgutoberfläche 15 zu einer Radarantenne 13 der Radarsensoreinheit 11 detektieren. Es sei angemerkt, dass die Radarantenne 13 der Radarsensoreinheit 11 in Form einer Hornantenne, einer Planarantenne, einer Parabolantenne, einer Linsenantenne, einer Arrayantenne oder einer anderen beliebigen Antennenform ausgebildet sein kann.

Steigt beispielsweise der Füllstand 16 an, so dass sich die Füllgutoberfläche 15 in Richtung des Grenzstandsensors 12 bewegt, so kann der Grenzstandsensor 12, sobald das Füllgut 17 den Grenzstandsensor 12 erreicht hat, das Unterschreiten des Mindestabstandes 18 zwischen der Füllgutoberfläche 15 zur Radarantenne 13 bzw. zur Radarsensoreinheit 11 detektieren. In dem in Fig. 1 dargestellten Fall ist die Grenzstandsensoreinheit 12 beispielsweise ein Vibrationssensor mit einer Stimmgabel, welche das Unterschreiten des Mindestabstandes 18 feststellt, sobald das Füllgut 17 mit der Stimmgabel der Grenzstandsensoreinheit 12 in Kontakt tritt. Somit kann rechtzeitig ein Warnsignal eines überfüllten bzw. vollen Zustandes des Behälters 19 detektiert werden, welches schließlich von einer hier nicht dargestellten Auswerteeinheit an einen Benutzer ausgegeben werden kann. Eine solche Anordnung ist insbesondere von Vorteil, da durch die Radarsensoreinheit 11 allein ein überfüllter Zustand des Behälters 19 mit einem zu hohen Füllstand 16 des Füllgutes 17 nur mit ungenaueren Messwerten des Füllstandes 16 oder gar nicht detektiert werden könnte.

Fig. 2 zeigt eine mögliche Anordnung der Radarsensoreinheit 11 innerhalb des Gehäuses 20 und des Grenzstandsensors 12 an dem Gehäuse 20. Dabei ist der Grenzstandsensor 12 in Form eines Vibrationssensors 21 ausgeführt, wobei eine Stimmgabel 23, sobald sie in Kontakt mit dem nicht dargestellten Füllgut 17 tritt, eine Änderung einer Vibration feststellt und damit einen überfüllten Zustand, das heißt das Unterschreiten des Mindestabstandes 18 zwischen der Füllgutoberfläche 15 und der Radarantenne 13 feststellen kann. Die Radarantenne 13 der Radarsensoreinheit 11 ist beispielsweise durch eine Abdeckung 22 abgeschlossen, wobei sich die Abdeckung 22 zwischen der Radarantenne 13, welche beispielsweise in Form einer Hornantenne ausgeführt ist, und der Füllgutoberfläche 15, welche in Fig. 2 nicht dargestellt ist, befindet. Die Stimmgabel ist dabei senkrecht am Gehäuse 20 angeordnet, so dass die Stimmgabel 23 des Vibrationssensors 21 in Richtung der Füllgutoberfläche 15 des Füllgutes 17 gerichtet ist. Bei dieser Anordnung kann ein Unterschreiten des Mindestabstandes 18 zwischen Füllgutoberfläche 15 und Radarantenne 13 detektiert werden, bevor die Füllgutoberfläche 15 und damit der Füllstand 16 die Radarantenne 13 erreicht hat. Insbesondere ist dies der Fall, bevor der Füllstand 16 das Gehäuse 20, in welchem sich die Radarantenne 13 befindet, erreicht hat, so dass eine Überflutung der Radarantenne 13 bzw. des Gehäuses 20 noch vor Unterschreiten des Mindestabstandes 18 detektiert wird.

Fig. 3 zeigt eine weitere Anordnung der Radarantenne 13, welche sich wiederum in dem Gehäuse 20 befindet und des Grenzstandsensors 12. Der Grenzstandsensor 12 ist nun derart an dem Gehäuse 20 befestigt, dass die Stimmgabel 23 des Vibrationssensors 21 horizontal ausgerichtet ist und somit die Stimmgabel 23 auch parallel zur nicht dargestellten Füllgutoberfläche 15 ausgerichtet ist. Diese Anordnung kann ein Unterschreiten des Mindestabstandes 18 zwischen der Füllgutoberfläche 15 und der Radarantenne 13 detektieren, wenn zumindest ein Teil des Gehäuses 20 und damit die Stimmgabel 23 des Vibrationssensors 21 bzw. des Grenzstandsensors 12 mit dem Füllgut 17 in Kontakt steht.

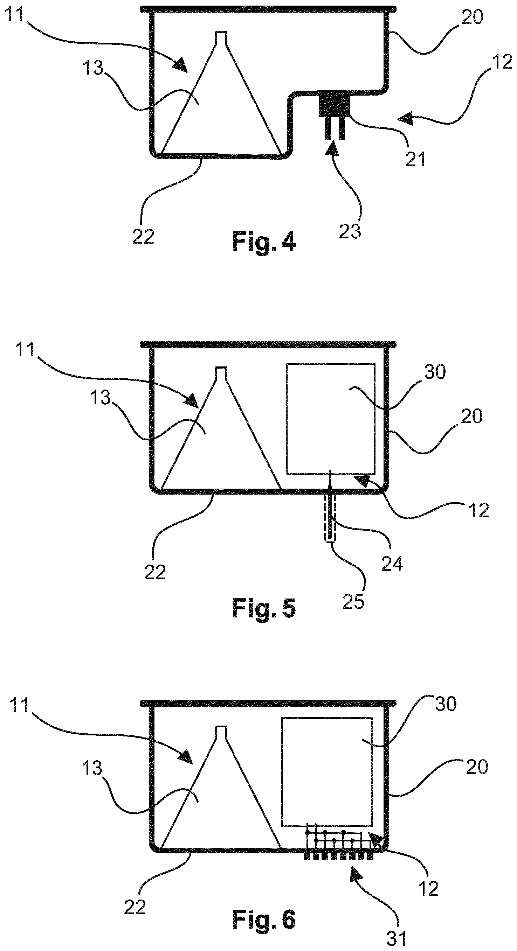

Fig. 4 zeigt eine weitere Anordnung der Radarantenne 13 in dem Gehäuse 20, wobei der Grenzstandsensor 12 senkrecht angeordnet ist. Das bedeutet, dass der Grenzstandsensor 12, welcher in Form eines Vibrationssensors 21 ausgeführt ist, die Stimmgabel 23 aufweist, welche in Richtung der Füllgutoberfläche 15 weist. Der Vibrationssensor 21 ist in einer Aussparung an dem Gehäuse 20 angebracht. Auch in dem in Fig. 4 dargestellten Beispiel wird das Unterschreiten des Mindestabstandes 18 der Füllgutoberfläche 15 zur Radarantenne 13 erst detektiert, wenn zumindest ein Teil des Gehäuses 20 und insbesondere die Abdeckung 22 der Radarantenne 13 mit der Flüssigkeit in Kontakt steht.

Dieser Zusammenhang folgt aus der Tatsache, dass die Stimmgabel 23 in Kontakt mit dem Füllgut 17 stehen sollte, damit der Grenzstandsensor 12 bzw. der Vibrationssensor 21 ein Überschreiten eines Grenzstandes bzw. das Unterschreiten des Mindestabstandes 18 zwischen der Füllgutoberfläche 15 zur Radarantenne 13 detektiert.

Fig. 5 zeigt eine Anordnung eines Radar-Füllstandmessgerätes 10 mit einer Radarantenne 13 einer Radarsensoreinheit 11 und einem Grenzstandsensor 12, welcher zur Detektion des Unterschreitens des Mindestabstands 18 zwischen Füllgutoberfläche 15 und Radarantenne 13 unter Verwendung von Zeitbereichsreflektometrie (TDR) ausgeführt ist. Hierfür ist an einem unteren Ende des Gehäuses 20 ein Stab 24 angebracht, der sich zu einem Teil innerhalb des Gehäuses 20 erstreckt und zu einem anderen Teil außerhalb des Gehäuses. Der Stab 24 kann metallisch blank sein oder durch eine Isolierung 25 ummantelt sein. Dabei ist insbesondere derjenige Teil des Stabs 24 mit der Isolierung 25 ummantelt, welcher aus dem Gehäuse 20 herausragt. Der Stab 24 kann auch mit dem Gehäuse 20 umspritzt sein. Eine Isolationsschicht der Isolierung 25 sollte vorzugsweise eine vorgegebene Maximaldicke nicht überschreiten.

Ferner ist in dem Gehäuse 20 eine Elektronikeinheit bzw. Elektronik 30 vorgesehen, welche mit dem Stab 24 elektrisch leitfähig verbunden ist. Zur Detektion, ob der Mindestabstand 18 unterschritten ist, ist an dem Stab 24 ein sog. TDR-Signal geführt. Somit kann festgestellt werden, ob der Füllstand 16 einen bestimmten Grenzwert überschritten hat und ob folglich ein Warnsignal ausgegeben werden soll, welches einen überfüllten Zustand des hier nicht dargestellten Behälters 19 indiziert. Ein überfüllter Zustand kann durch die in Fig. 5 gezeigte Konfiguration bereits detektiert werden, wenn der Füllstand 16, das heißt die Füllgutoberfläche 15, das Gehäuse 20 noch nicht erreicht hat.

Fig. 6 zeigt eine Anordnung eines Radar-Füllstandmessgerätes 10 mit einer Radarantenne 13 einer Radarsensoreinheit 11 und einem Grenzstandsensor 12. Der Grenzstandsensor 12 ist dabei dazu ausgeführt, das Unterschreiten des Mindestabstands 18 zwischen Füllgutoberfläche 15 und Radarantenne 13 unter Verwendung einer konduktiven Messung zu detektieren. Dazu sind außerhalb des Gehäuses 20 Elektroden 31 vorgesehen, welche einen Teil der Grenzstandsensoreinheit 12 bilden können. Die Elektroden 31 können elektrisch leitfähig mit einer sich in dem Gehäuse 20 befindenden Elektronik 30 verbunden sein. Eine sich nähernde Füllgutoberfläche 15 kann bei Erreichen der Elektroden 31, welche außen am Gehäuse 20 befestigt sind, eine Änderung der Leitfähigkeit bewirken, so dass aufgrund der Änderung der Leitfähigkeit das Unterschreiten des Mindestabstandes 18 bzw. das Überschreiten eines Grenzwertes des Füllstandes 16 detektiert werden kann.

Es sei angemerkt, dass zur konduktiven Messung mindestens zwei Elektroden 31 auf der Außenfläche bzw. Außenseite des Gehäuses 20 angebracht sind und zum Inneren des Gehäuses 20 und damit zur Elektronik 30 kontaktiert werden. Vorzugsweise sind die Elektroden 31 an einer Unterseite des Gehäuses 20 angebracht und damit der Füllgutoberfläche 15 zugewandt. Die Elektroden 31 können Stäbe aus Metall oder Metallisierungen auf dem Gehäuse 20 sein, wobei das Gehäuse 20 beispielsweise aus einem Kunststoff gefertigt ist. Die Metallisierungen bzw. Elektroden 31 können auch an einem in Richtung der Füllgutoberfläche 15 hervorstehenden Ansatz am Gehäuse 20 angebracht sein.

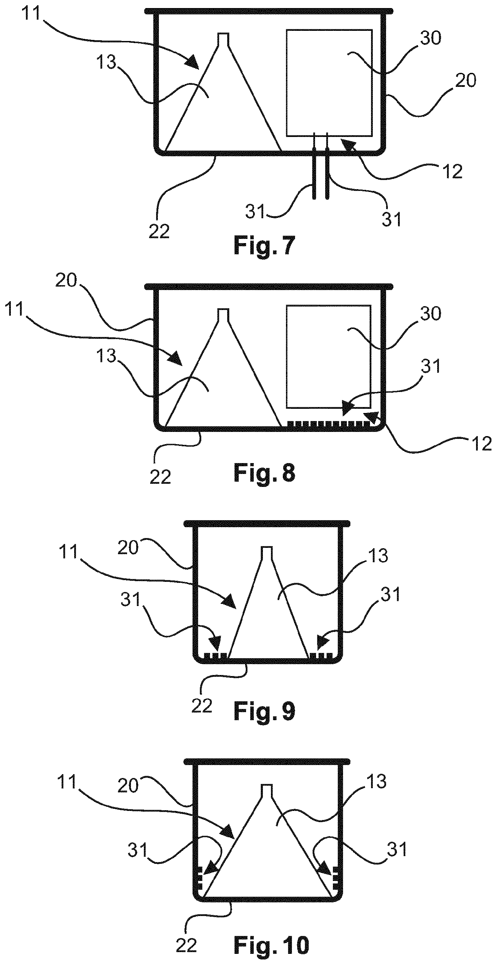

Fig. 7 zeigt eine weitere Anordnung eines Radar-Füllstandmessgerätes 10 mit einer Radarantenne 13 einer Radarsensoreinheit 11 und einem Grenzstandsensor 12. Der Grenzstandsensor 12 ist dabei ebenfalls dazu ausgeführt, das Unterschreiten des Mindestabstands 18 zwischen Füllgutoberfläche 15 und Radarantenne 13 unter Verwendung einer konduktiven Messung zu detektieren. Hierfür ragen zwei Stäbe, welche die Elektroden 31 bilden, aus dem Gehäuse 20 heraus. Die Elektroden 31 sind wiederum im Inneren des Gehäuses 20 mit der Elektronik 30 elektrisch leitfähig kontaktiert.

Fig. 8 zeigt eine Radarsensoreinheit 11 mit einer Radarantenne 13 in einem Gehäuse 20, wobei der Grenzstandsensor 12 Elektroden 31 und/oder eine Elektronik 30 aufweist. In diesem Fall ist der Grenzstandsensor 12 zur kapazitiven Messung des Unterschreitens des Mindestabstandes 18 der Füllgutoberfläche 15 zur Radarantenne 13 ausgeführt. Die Elektroden 31 zur kapazitiven Messung sind dabei beispielsweise innerhalb des Gehäuses 20 angeordnet. Beispielsweise sind sie neben der Radarantenne 13 in Form einer streifenförmigen Struktur angeordnet. Die Elektroden 31 können beispielsweise parallel zueinander und/oder auf einer Innenfläche des Gehäuses 20 verlaufen.

Fig. 9 zeigt eine Anordnung der Elektroden 31 zur kapazitiven Messung des Unterschreitens des Mindestabstandes 18 der Füllgutoberfläche 15 zur Radarantenne 13, bei welcher die Elektroden 31 ringförmig um die Radarantenne 13 angeordnet sind. Dabei sind die Radarantenne 13 sowie die Elektroden 31 innerhalb des Gehäuses 20 angeordnet. Die Elektroden 31 können dabei beispielsweise an einem Gehäuseboden und/oder einer Innenfläche des Gehäuses 20 ringförmig um die Radarantenne 13 angeordnet sein. Insbesondere können die Elektroden 31, welche ringförmig um die Radarantenne 13 angeordnet sind, im Bereich der Abdeckung 22 der Radarantenne 13 der Radarsensoreinheit 11 angeordnet sein. Werden mehr als 2 Elektroden verwendet, so kann eine der Elektroden 31, wie aus der kapazitiven Messtechnik bekannt, als Schirmelektrode zur Verringerung der Empfindlichkeit gegenüber Anhaftungen und Verschmutzungen dienen.

Fig. 10 zeigt eine weitere Anordnung der Elektroden 31 zur kapazitiven Messung des Unterschreitens des Mindestabstandes 18 der Füllgutoberfläche 15 zur Radarantenne 13, wobei die Elektroden 31 des Grenzstandsensors 12 ebenfalls ringförmig um die Radarantenne 13 angeordnet sind, jedoch nun entlang einer Seitenfläche des Gehäuses 20 verlaufen. Auch in diesem Fall sind die Elektroden 31 im Bereich der Abdeckung 22 des Gehäuses 20 angeordnet. Diese Ausführung ergibt beispielsweise eine noch platzsparendere Variante, so dass die Größe des Gehäuses 20 im Wesentlichen an die Ausdehnung der Radarantenne 13, welche beispielsweise eine Hornantenne ist, angepasst werden kann.

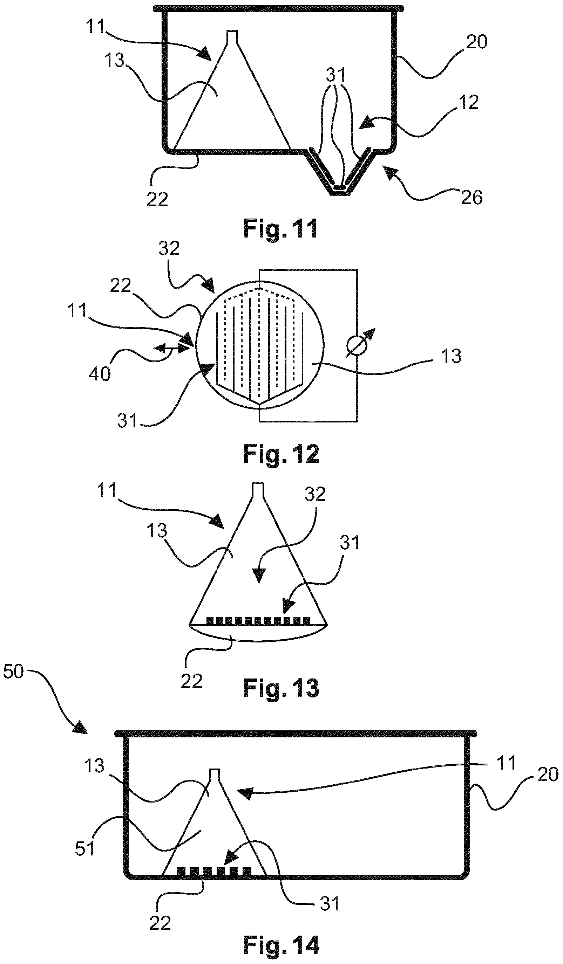

Fig. 11 zeigt eine weitere Anordnung eines Radar-Füllstandmessgerätes 10 mit einer Radarantenne 13 und einem Grenzstandsensor 12, wobei der Grenzstandsensor 12 mehrere in einem Ansatz 26 des Gehäuses 20 angeordnete Elektroden 31 und eine aus Gründen der Übersichtlichkeit hier nicht dargestellte Elektronik 30 aufweist. Diese Anordnung stellt eine weitere Möglichkeit zur kapazitiven Messung des Unterschreitens des Mindestabstands 18 zwischen Füllgutoberfläche 15 und Radarantenne 13 dar. Der Ansatz 26 mit den darin angeordneten Elektroden 31 ragt in Richtung der Füllgutoberfläche 15 aus dem Gehäuse 20 heraus, wobei die Elektroden 31 innerhalb des Gehäuses 20 angeordnet sind. Der Ansatz 26 ist zum Beispiel eine Ausstülpung aus dem Gehäuse 20, welche neben der Radarantenne 13 angeordnet ist. Bezüglich einer vertikalen Richtung, welche senkrecht zur Füllgutoberfläche 15 verläuft, kann der Ansatz 26 dort beginnen, wo die Radarantenne 13 endet. Der Ansatz 26 kann sich in Richtung der Füllgutoberfläche 15 verjüngen, wie es in Fig. 11 dargestellt ist. Insbesondere kann der Ansatz 26 in einem Querschnitt betrachtet etwa dreiecksförmig mit einer abgestumpften Spitze in Richtung des Füllgutes 17 ragen. Demnach kann der Ansatz 26 als dreidimensionaler Körper am Gehäuse 20 vorgesehen sein, beispielsweise in Form eines Kegelstumpfs oder eines Pyramidenstumpfs. Der Ansatz 26 kann aber auch einen dreieckigen Querschnitt über eine bestimmte Lange oder über die gesamte Breite des Gehäuses 20 aufweisen. Diese Ausgestaltung weist dann an einer Unterseite des Ansatzes 26 eine Kante auf. Es können drei Elektroden 31 in dem Ansatz 26 vorgesehen sein, wobei zwei der Elektroden 31 an einem sich verjüngenden Abschnitt des Ansatzes 26 angebracht sind und eine weitere Elektrode 31 horizontal an einem Boden des Ansatzes 26 angebracht ist. Das Unterschreiten des Mindestabstands 18 zwischen Füllgutoberfläche 15 und Radarantenne 13 kann auch hier bereits detektiert werden, wenn der Füllstand 16 noch nicht die Abdeckung 22 der Radarantenne 13 erreicht hat.

Fig. 12 zeigt eine Draufsicht bzw. Schnittansicht auf eine Abdeckung 22 einer Radarantenne 13, wobei in die Abdeckung 22 Elektroden 31 zur kapazitiven Messung des Unterschreitens des Mindestabstandes 18 der Füllgutoberfläche 15 zur Radarantenne 13 angeordnet sind. Insbesondere sind die Elektroden 31 in einer streifenförmigen Struktur 32 in der Abdeckung 22 angeordnet. Die streifenförmige Struktur 32 ist vergleichbar mit einer kammartigen Struktur, bei welcher die Elektroden 31 ineinandergreifen. Insbesondere können zwei Elektroden 31 vorgesehen sein, wobei jede Elektrode eine Vielzahl von parallelen streifenförmigen Abschnitten aufweist. Dabei kann vorgesehen sein, dass die Elektroden auf der Abdeckung 22 oder im Gehäuse 20 in Form von Metalleinlegeteilen in den Kunststoff eingespritzt werden. Ferner können die Elektroden 31 auch auf dem Kunststoff metallisiert sein. Die streifenförmige Struktur 32 wird beispielsweise durch eine Anordnung von mehreren parallel angeordneten Elektroden 31 zur kapazitiven Messung gebildet. Dies erlaubt es, ein Signal, insbesondere ein Mikrowellensignal, mit einer bestimmten Polarisationsrichtung 40 durch die streifenförmige Struktur 32 der Elektroden 31 hindurchzulassen bzw. zu transmittieren, sofern die streifenförmige Struktur 32, das heißt die parallel angeordneten streifenförmig ausgebildeten Elektroden 31, in einem Winkel von 90° zum elektrischen Feld der Signale bzw. Mikrowellensignale angeordnet ist. Insbesondere kann die streifenförmige Struktur 32 auch als Polarisationsfilter verwendet werden und damit die Eigenschaften der Radarantenne 13 verbessern.

Dafür ist die streifenförmige Struktur 32 in der Abdeckung 22 angeordnet und befindet sich somit zwischen der Radarantenne 13 und der Füllgutoberfläche 15.

Fig. 13 zeigt eine Seitenansicht bzw. eine Schnittansicht der Abdeckung 22 aus Fig. 12. Hier ist zu erkennen, dass die Elektroden 31 an bzw. in der Abdeckung 22 vorgesehen sind und somit zwischen der Radarantenne 13 und der hier nicht dargestellten Füllgutoberfläche 15 angeordnet sind. Die Elektroden 31 sind dabei in der streifenförmigen Struktur 32 angeordnet. Es sei angemerkt, dass die Abdeckung 22 zugleich einen Teil des Gehäuses 20 bilden kann. Das Gehäuse 20 ist jedoch aus Gründen der Übersichtlichkeit in Fig. 13 nicht dargestellt.

Fig. 14 zeigt eine Radarantennenanordnung 50 mit einem Gehäuse 20 sowie einem Radarantennenhorn 51, wobei das Radarantennenhorn 51 ein Teil einer Radarantenne 13 und damit einen Teil einer Radarsensoreinheit 11 bilden kann. Die Radarantennenanordnung 50 weist ferner eine Grenzstandsensoreinheit 12 auf, wobei in Fig. 14 Elektroden 31 der Grenzstandsensoreinheit 12 gezeigt sind. Die Abdeckung 22 bildet einen Teil des Gehäuses 20, in welchem das Radarantennenhorn 51 sowie die Grenzstandsensoreinheit 12 mit den Elektroden 31 angeordnet ist. Die Elektroden 31 zur kapazitiven Messung können beispielsweise einen Teil der Grenzstandsensoreinheit 12 bilden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweise auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Radar-Füllstandmessgerät (10), aufweisend:
eine Radarsensoreinheit (11) mit einer Radarantenne (13) zum Abstrahlen eines Messsignals (14) in Richtung einer Füllgutoberfläche (15);
wobei die Radarsensoreinheit (11) dazu ausgeführt ist, einen Füllstand (16) des Füllgutes (17) zu bestimmen;
eine Grenzstandsensoreinheit (12); und
ein Gehäuse (20), in welchem die Radarantenne (13) angeordnet ist,
wobei die Grenzstandsensoreinheit (12) dazu ausgeführt ist, ein Unterschreiten eines Mindestabstandes (18) der Füllgutoberfläche (15) zur Radarantenne (13) zu detektieren und Messwerte, welche von der Radarsensoreinheit (11) bei Unterschreiten des Mindestabstandes (18) der Füllgutoberfläche (15) zur Radarantenne (13) ermittelt wurden, für eine Auswertung nicht zu verwenden,
wobei die Grenzstandsensoreinheit (12) dazu ausgeführt ist, das Unterschreiten des Mindestabstandes (18) der Füllgutoberfläche (15) zur Radarantenne (13) basierend auf einer kapazitiven Messung zu detektieren,
wobei für die kapazitive Messung Elektroden (31) im Gehäuse (20) des Radar-Füllstandmessgerätes (10) angebracht sind,
wobei die Elektroden (31) zur kapazitiven Messung im Gehäuse (20) ringförmig um die Radarsensoreinheit (11) angeordnet sind; und
wobei die Grenzstandsensoreinheit (12) am oder im Gehäuse (20) angeordnet ist.

2. Radar-Füllstandmessgerät nach Anspruch 1,
wobei die Grenzstandsensoreinheit (12) dazu ausgeführt ist, das Unterschreiten des Mindestabstandes (18) der Füllgutoberfläche (15) zur Radarantenne (13) basierend auf einem elektromagnetischen Signal zu detektieren.

3. Radar-Füllstandmessgerät nach Anspruch 1,
wobei die Radarantenne (13) eine Abdeckung (22) aufweist, in welche die Elektroden (31) zur kapazitiven Messung integriert sind.

4. Radar-Füllstandmessgerät nach Anspruch 3,
wobei die Elektroden (31) zur kapazitiven Messung in Form von Metalleinlegeteilen in die Abdeckung (22) der Radarantenne (13) eingespritzt sind.

5. Radar-Füllstandmessgerät nach einem der vorhergehenden Ansprüche, wobei zumindest ein Teil der Grenzstandsensoreinheit (12) zwischen der Radarsensoreinheit (11) und dem Füllgut (17) angeordnet ist.

## Claims

1. A radar fill level measuring device (10), comprising:
a radar sensor unit (11) with a radar antenna (13) for emitting a measurement signal (14) in the direction of a product surface (15);
wherein the radar sensor unit (11) is configured to determine a filling level (16) of the filling material (17);
a level sensor unit (12); and
a housing (20) in which the radar antenna (13) is arranged,
wherein the level sensor unit (12) is configured to detect an underrunning of a minimum distance (18) of the product surface (15) to the radar antenna (13) and not to use measured values, which were determined by the radar sensor unit (11) when the minimum distance (18) of the product surface (15) to the radar antenna (13) was underrun, for an evaluation,
wherein the limit level sensor unit (12) is configured to detect the underrunning of the minimum distance (18) of the product surface (15) from the radar antenna (13) based on a capacitive measurement,
wherein electrodes (31) for the capacitive measurement are mounted in the housing (20) of the radar level measuring device (10),
wherein the electrodes (31) for capacitive measurement are arranged in the housing (20) in an annular manner around the radar sensor unit (11); and
wherein the level sensor unit (12) is arranged on or in the housing (20).

2. The radar fill level measuring device according to claim 1,
wherein the level sensor unit (12) is designed to detect the underrunning of the minimum distance (18) of the product surface (15) to the radar antenna (13) based on an electromagnetic signal.

3. The radar fill level measuring device according to claim 1,
wherein the radar antenna (13) has a cover (22), in which the electrodes (31) for capacitive measurement are integrated.

4. The radar fill level measuring device according to claim 3,
wherein the electrodes (31) for capacitive measurement are injected into the cover (22) of the radar antenna (13) in form of metal inserts.

5. The radar fill level measuring device according to any one of the preceding claims,
wherein at least a part of the level sensor unit (12) is arranged between the radar sensor unit (11) and the filling material (17).

## Revendications

1. Appareil de mesure de niveau de remplissage par radar (10), présentant :
une unité de capteur radar (11) comportant une antenne radar (13) pour émettre un signal de mesure (14) en direction d'une surface de produit de remplissage (15) ;
dans lequel l'unité de capteur radar (11) est conçue pour déterminer un niveau de remplissage (16) du produit de remplissage (17) ;
une unité de détection de niveau limite (12) ; et
un boîtier (20) dans lequel est disposée l'antenne radar (13),
dans lequel l'unité de détection de niveau limite (12) est conçue pour détecter un dépassement vers le bas d'une distance minimale (18) entre la surface de produit de remplissage (15) et l'antenne radar (13) et pour ne pas utiliser pour une évaluation des valeurs de mesure qui ont été déterminées par l'unité de détection radar (11) en cas de dépassement vers le bas de la distance minimale (18) entre la surface de produit de remplissage (15) et l'antenne radar (13), dans lequel l'unité de détection de niveau limite (12) est conçue pour détecter le dépassement vers le bas de la distance minimale (18) entre la surface de produit (15) et l'antenne radar (13) sur la base d'une mesure capacitive,
dans lequel des électrodes (31) sont placées dans le boîtier (20) de l'appareil de mesure de niveau de remplissage par radar (10) pour la mesure capacitive, dans lequel les électrodes (31) pour la mesure capacitive sont disposées dans le boîtier (20) en forme d'anneau autour de l'unité de capteur radar (11) ; et
dans lequel l'unité de détection de niveau limite (12) est disposée sur ou dans le boîtier (20).

2. Appareil de mesure de niveau de remplissage par radar selon la revendication 1,
dans lequel l'unité de détection de niveau limite (12) est conçue pour détecter le dépassement vers le bas de la distance minimale (18) entre la surface de produit (15) et l'antenne radar (13) sur la base d'un signal électromagnétique.

3. Appareil de mesure de niveau de remplissage par radar selon la revendication 1,
dans lequel l'antenne radar (13) présente un recouvrement (22) dans lequel sont intégrées les électrodes (31) pour la mesure capacitive.

4. Appareil de mesure de niveau de remplissage par radar selon la revendication 3,
dans lequel les électrodes (31) pour la mesure capacitive sont injectées sous la forme d'inserts métalliques dans le recouvrement (22) de l'antenne radar (13).

5. Appareil de mesure de niveau de remplissage par radar selon l'une des revendications précédentes,
dans lequel au moins une partie de l'unité de détection de niveau limite (12) est disposée entre l'unité de détection radar (11) et le produit de remplissage (17).
